# EUROPEAN PATENT APPLICATION

(11) **EP 0 630 070 A1**
(43) Date of publication of application: **21.12.1994**
(21) Application number: 94303852.1
(22) Date of filing: 27.05.1994
(51) Int. Cl.: H01Q 13/20, H01Q 1/00, H04B 5/00

(54) **Leaky antenna for personal communications system**

(30) Priority: 29.05.1993 JP 165869/93; 26.12.1993 JP 354932/93; 09.01.1994 JP 23015/94; 14.01.1994 JP 28789/94
(71) Applicant: Niki, Yoshiro, Nagoya 464 (JP)
(72) Inventor: Niki, Yoshiro, Nagoya 464 (JP)
(74) Representative: Rackham, Anthony Charles

(57) **Abstract**

A Leaky Antenna for use in a Personal Handy Phone system or in a Personal Communications System (hereinafter refered to as a PHS or PCS) or in DECT, which are operated under the FDMA/TDD, TDMA/TDD or CDMA scheme, and within a closed area such as within a building and/or under the ground, where the RF propagations are sometimes prevented by walls, ceilings, and/or other obstacles.

The Leaky Antenna is invented to sprinkle the RF signals into all the corners of system serving area even under the above conditions. The Leaky Antenna is defined as Antenna which has a common metal plane, a plurality of radiation element, and RF transmission means to couple the RF signals partially and to sprinkle them into the closed areas.

Moreover, said Leaky Antenna is installed under the ceiling within a building, or an under ground mole with glue or other fixing means. If the Leaky Antenna is very thin and covered of the same color, it will be attractive from the interior designing view point.

## Description

The invention relates mobile communications systems and generally to the field of sprinkling facilities for RF (Radio-Frequency) signals which are transmitted/received to/from one or more FDMA (Frequency Division Multiple Access/Time Division Duplex) or TDMA/TDD (Time Division Multiple Access/Time Division Duplex) or CDMA (Code Division Multiple Access) base stations, and more specifically relates to the facilities to sprinkle the combined FDMA/TDD or TDMA/TDD or CDMA RF carriers for enhancing the serving area of PHS (Personal Handy Phone System) or PCS (Personal Communications System) which serving area is sometime limited by some obstructions such as walls and/or ceilings that block the RF signals.

When the Leaky Antenna is applied for combining one or more FDMA/ TDD or TDMA/TDD or CDMA carriers and sprinkled them within a plurality of the micro-cell serving area, the traffic capacity (consequently the efficiency of channel usage) of the RF carriers is greatly improved, compared to when these FDMA/TDD or TDMA/TDD or CDMA carriers are not combined and operated as an independent micro-cell serving area.

PHS i.e. PCS or PCN (Personal Communications Network) have recently been introduced in a number of outdoor and/or indoor areas to provide wireless public telephone coverages for people who need to have access to public telephones from either inside or outside of their offices or who are otherwise inconvenient to approach to the public telephones that are hard-wired to a PBX and/or a central switching office over conventional public telephone lines.

In a PHS or a PCS, an area is divided into a plurality of small regions, or "micro-cells", each of which is covered by very low power (10mW) transmitters. Currently, PHS or PCS services are being provided on the 1.9GHz frequency bands and operated in either the FDMA/TDD or TDMA/TDD or CDMA schemes wherein the transmitter and receiver set share the same frequency carrier by dividing the time domain into two divisions. One of the divisions is used for "down-link" transmissions from a base station to the subscribers. The "micro-cell site" is the location of the antenna from which the transmissions are propagated for the micro-cell. Another time division is used for "up-link" transmissions from the subscribers within the micro-cell for reception by the base station receiver, currently, a stand-alone base station is provided centrally within the micro-cell site. Each frequency carrier assigned with 300 kilohertz for PHS and 100kilohertz for CT-2.

"Antenna Engineering Handbook, Page 109" published by Ohm Corporation, discloses the micro-strip antenna which has a single radiation element and is solely mached with the radiation impedance at the input terminal, and radiated almost whole RF powers of down-link signals into an obstructed area, and also for receiving up-link signals from mobile subscribers in that area.

Problems may arise with the above-described antenna when applied for the PHS or PCS. Since the antenna radiates RF signals at a single point and the RF signals on 1.9 GHz is tend to propagate along the str ight way, the RF signals may be obstructed just behind of walls, furnitures, and other obstacles.

The invention provides a new and improved apparatus for sprinkling the RF singals to/from a base station to enhance the coverage of the serving area where the obstructions otherwise reduce the RF signal levels, and for distributing one or more FDMA/TDD or TDMA/TDD or CDMA carriers into a plurality of the micro-cell serving area to achieve the extremely higher efficiency in the channel usage. The Leaky Antenna system must have the sufficient length to sprinkle the RF signals assigned for the PHS or PCS so as to avoid shadowing by the obstacles. Moreover, when a plurality of base stations are installed adjoined each other, and if one base station needs to share one traffic channel, this base station must listen first whether this traffic channel is occupied or not. This action is named as "Listen-Before-Talk". To do this, enough isolations must be maintained between transmitting antenna and receiving antenna.

In brief summary, the apparatus includes a common metal plane, a micro-strip line, and a plurality of radiation elements coupled to the said micro-strip line.

In one embodiment, an input coaxial connector to connect a coaxial cable directing toward a base station, and one or more output coaxial connectors to connect coaxial cables directing towards other Leaky Antenna are provided to enhance and/or sprinkle the RF signals into a plurality of the micro-cell serving area. The input coaxial connector and output coaxial connector are connected through micro-strip line and/ or coaxial cable, and a plurality of radiation elements are coupled to the said micro-strip line and/or coaxial cable.

In a second embodiment, only an input coaxial connector to connect a coaxial cable directing toward a base station are provided to enhance and/or sprinkle the RF signals into the micro-cell serving area. The input coaxial connector is connected to the micro-strip line and/or coaxial cable, and a plurality of radiation elements are coupled to the said micro-strip line and/or coaxial cable.

The antenna may have means to be attached somewhere like to a ceiling, it may be coloured to match with its surroundings, and it may have divider means to distribute the RF signals to multi-directions.

The above and further advantages of the invention will be better understood by referring to the following detailed descriptions of an illustrative embodiment taken in conjunction with the accompanying drawings, in which:
Figure 1 is an installation scheme of the Leaky Antenna in accordance with the invention;
Figure 2 is another installation scheme of the Leaky Antenna in accordance with the invention;
Figure 3 is another installation scheme of the Leaky Antenna in accordance with the invention;
Figure 4 is another installation scheme of the Leaky Antenna in accordance with the invention;
Figure 5 is another installation scheme of the Leaky Antenna in accordance with the invention;
Figure 6 is a structure of the Leaky Antenna in accordance with the invention;
Figure 7 is a structure of the other type of the Leaky Antenna in accordance with the invention;
Figure 8 is a structure of the other type of the Leaky Antenna in accordance with the invention;
FIG. 9 is a structure of the other type of the Leaky Antenna in accordance with the invention;
FIG. 10 is a structure of the other type of the leaky Antenna in accordance with the invention;
FIG. 11 is a structure of the other type of the Leaky Antenna in accordance with theinvention;
FIG. 12 is a structure of the other type of the Leaky Antenna in accordance with the invention;
FIG. 13 is a structure of the other type of the Leaky Antenna in accordance with theinvention;
FIG. 14 is a structure of the other type of the Leaky Antenna in accordance with the invention;
FIG. 15 is a structure of the other type of the Leaky Antenna in accordance with the invention;
FIG. 16 is a structure of the other type of the leaky Antenna in a ccordance with theinvention;
FIG. 17 is a structure of the other type of the Leaky Antenna in accordance with the invention; and
FIG. 18 is a block diagram of a prior art of cell enhancers.

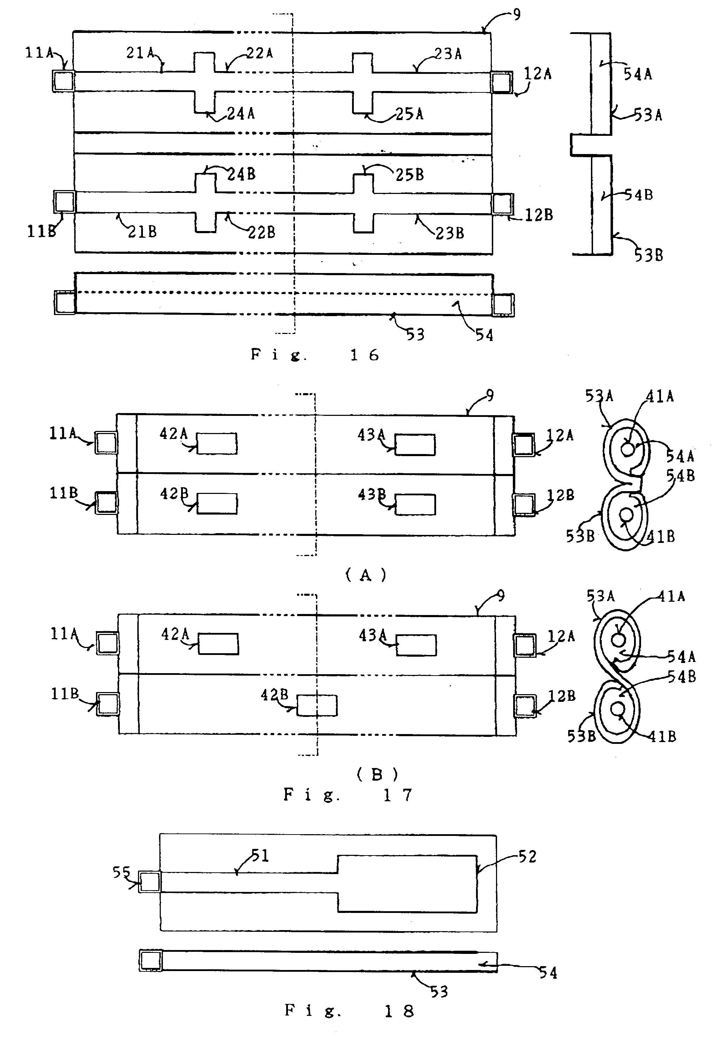

With reference to FIG. 18, which depicts a Antenna as described in the aforementioned handbook a prior art of antenna, 51 is a micro-strip line, 52 is a radiation element, 53 is a ground plane, 54 is a printed wire board, and 55 is an input terminal.

The micro-strip line 51 which is constituted on the printed wire board 54 is terminated with the micro-strip antenna 52. When the RF signal are coupled to the micro-strip line 51 through the input terminal 55, a magnetic current is performed between micro-strip antenna 52 and ground plane 53, and RF signals are radiated into the open spaces. RF signals coupled with the terminal 55 are whole radiated except for losses, and this antenna is used for in the matching conditions.

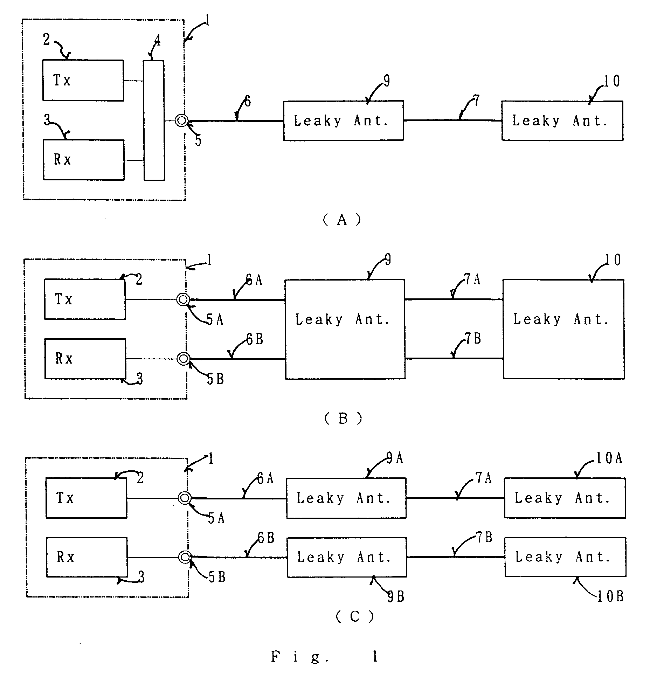

With reference to FIG. 1(A), 1 is a base station which is operated under the FDMA/TDD, TDMA/TDD, or CDMA system and where a set of transmitter 2 and receiver 3 is operated on the same frequency, 4 is a divider, 6 and 7 are coaxial cables, and 9 and 10 are leaky antenna. The RF signals from a base station 1 are coupled with leaky antenna 9 and 10 through coaxial cables 6 and 7 and a part of RF signals are radiated into the open spaces. If the radiation characteristics of the leaky antenna 9 and 10 are appropreately designed and the distance between them are adequately settled, RF signals can be propagated a 11 arround the serving area.

With reference to FIG. 1(B), leaky antenna 9 and 10 are connected individually to the transmitter output terminal 5A and receiver terminal 5B through the coaxial cables 6A, 6B, 7A and 7B, and within the leaky antenna 9 and 10 two lines of leaky antenna are installed with maintaining sufficient isolations between them and then it makes the sufficient isolations between the transmitter 2 and receiver 3. With reference to FIG. 1(C), leaky antenna 9A, 9B, 10A and 10B are connected indipendently to the transmitter output terminal 5A and receiver terminal 5B through the coaxial cables 6A, 6B, 7A, and 7B, and if the isolations between leaky antenna 9 and 10 are sufficient, and then it makes the sufficient isolations between the transmitter 2 and receiver 3.

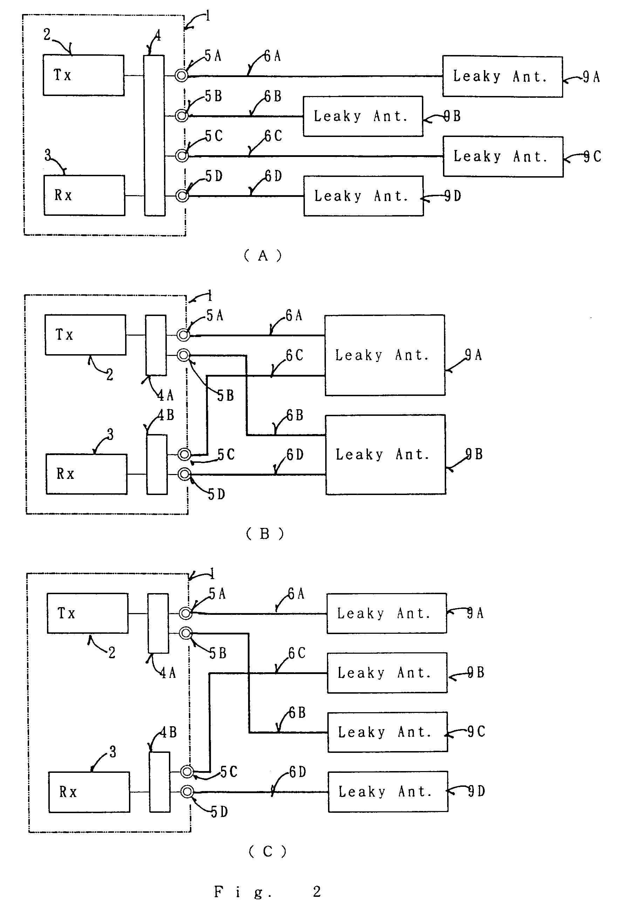

With reference to FIG. 2(A), terminated type leaky antenna 9A, 9B, 9C and 9D are connected to the RF input/output terminals 5A, 5B, 5C and 5D of the divider circuit 4. RF signals from the base station 1 are coupled with the leaky antenna 9A, 9B, 9C and 9D through coaxial cables 6A, 6B, 6C and 6D and radiated into the open spaces. For example, if the length of these leaky antenna 9A, 9B, 9C and 9D is fixed on the several meter to several-ten meters, and if the number of radiation elements and the coupling facter with micro-strip line are appropreately designed, RF signals are propagated all arround the serving area.

With reference to FIG. 2 (B), terminatd type leaky antenna 9A and 9B are connected individually to the transmitter output terminal 5A and 5B and receiver terminal 5C and 5D through the coaxial cables 6A, 6B, 6C and 6D, and within the leaky antenna 9A and 9B two lines of leaky antenna are installed with maintaining sufficient isolations between them, and then it makes the sufficient isolations between the transmitter 2 and receiver 3.

With reference to FIG. 2 (C), leaky antenna 9A, 9B, 9C and 9D are connected indipendently to the transmitter output terminal 5A and 5B and receiver terminal 5B through the coaxial cables 6A, 6B, 7A, 7B, 8A and 8B, and if the isolations between leaky antenna 9A and 9B are sufficient, and then it makes the sufficient isolations between the transmitter 2 and receiver 3.

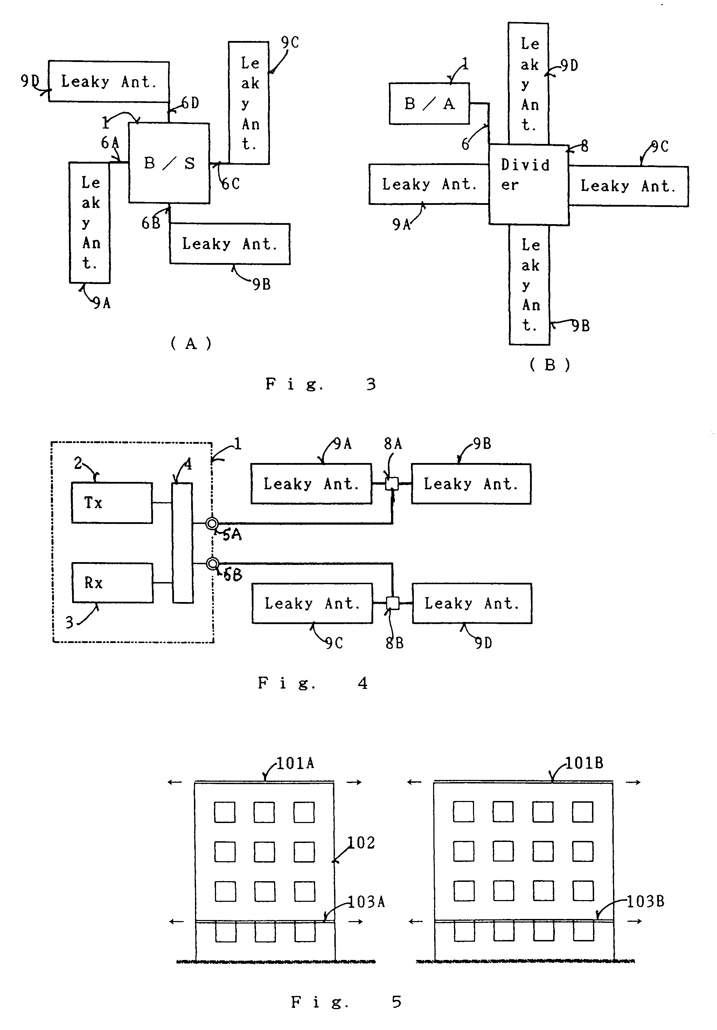

FIG. 3 (A) shows one example of the installation scheme, in which four leaky antenna 9A, 9B, 9C and 9D of this invention are connected to configure 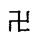 or + characters. By this configuration, RF signals are propagated equally to the east/west and north/south directions, or if the east/west are assigned for transmitter 2 and the north/south are assigned for receiver 3 or vice versa, more isolations can be performed between transmitting antenna and receiving antenna.

In FIG. 3 (B), 4 leaky antenna 9A 9B 9C and 9D are performed on an independent and/or common ground plane and configured 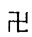 or + characters and combined with the divider 8 to connect the base station 1 through a coaxial cable 6.

FIG. 4 shows another example of the installation scheme, in which RF signals from base station 1 are coupled with and radiated from the leaky antenna 9A, 9B, 9C and 9D of this invention through coaxial cables 6A and 6B and divider 8A and 8B. For example, length of the leaky antenna 9A, 9B, 9C and 9D can be realized with several meters to several ten meters, and coupling losses between this leaky antenna and mobile subscribers are settled properly by adjusting the coupling between radiation elements and RF transmission lines.

As shown in Fig. 5, leaky antenna are installed within a dome 101A and 101B on the top of building or a dome 103A and 103B on the side wall of a building 102, and radiates RF singals all arround the serving area.

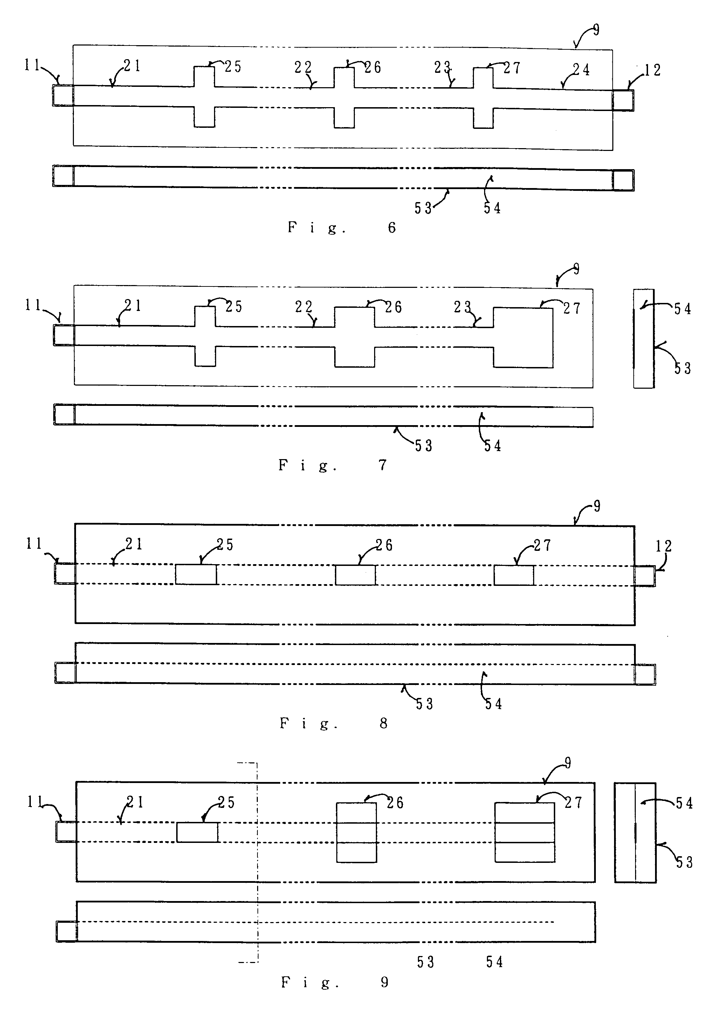

FIG. 6 shows one example of the leaky antenna of this invention, and 21, 22, 23 and 24 are micro-strip lines, 25, 26 and 27 are micro-strip antenna, 11 is an input terminal, 12 is an output terminal, 53 is ground plane, and 54 is a Printed Wire Board. Micro-strip antenna 25, 26 and 27 configures leaky antenna, and a plurality of micro-strip antenna are laid down along a straight line, a belt line, or a radiating line. And a flexible Printed Wire Board is used to realize totaly a flexible leaky antenna 9 instead of the normal Printed Wire Board. And the percentage of the RF signals radiated into serving area vs RF signals transfered to the output terminal 12 can be adjusted by the length of the micro-strip antenna 25, 26 and 27 and distances between micro-strip antenna and ordinal ground plane, and for instance coupling losses can be set up -30dBc∼-60dBC and transferrence loss is -0.5dB to -3dB.

The said leaky antenna 9 can be thin and long enough since it is constituted by a micro-strip line, then it can be attached in a non-conspicuous place such as under the ceiling, and it can sprinkle RF signals all arround within a room. Next stage leaky antenna 10 can be coupled to above through coaxial cables and/or both-way RF repeaters connecting at the output terminal 12 of the leaky antenna 9, and by that RF signals are distributed into wider area. The input impedance at terminals 11 and 12 are to be 50ohms, then the length of strip line 21 and 24 is to be quater wave length and its impedance shall be 50^{½} · zx (where z x shows average impedance of the leaky antenna 25 or 27).

And the radiation patern of this leaky antenna 9 can be optimumly set up by adjusting the interval of micro-strip antenna 25, 26 and 27, and/or the length of micro-strip line 22 and 23. Generally speaking, since there are a lot of reflections caused by obstacles in a building or under-ground, and since Bit-Error-Rate is increased there according to the delay-spread caused by propagation pass differences, it can be possible to decrease the influence of delay-spread if the leaky antenna 9 is given the vertical directivity on the radiation patern. And also, the valley of standing waves are sometime observed every half wave length starting from the wall surface in a room, but antenna which has a metal ground plane 53 is activly used such valley (zero potencial) on the surface of ground plane 53, it has a tendency to be good at the standing wave within a closed room.

FIG. 7 shows another example of this invention, and 21, 22 and 23 are transmission line by micro-strip lines, 25, 26 and 27 are micro-strip antenna, 11 is an input terminal, 53 is a ground plane, and 54 is a printed wire board. One side of printed wire board 54 is covered by the copper film as a ground plane 53, and on the another side micro-strip antenna 25, 26 and 27 are formed with proper interval, and these antenna are connected by micro-strip antenna 21, 22 and 23. Micro-strip antenna 25, 26 and 27 are increased their dimensions according to the distance from the terminal 11 to make equally radite the RF signals compensating the loss in micro-strip line 22 and 23.

FIG. 8 shows another example of this invention, and 21 is a transmission line by a tristate micro-strip line, 25, 26 and 27 are slot antenna formed on the outer conductor of tristate micro-strip line, 11 is an input terminal, 12 is an output terminal, 53 is an outer conductor of tristate micro-strip line, and 54 is a printed wire board. Slots 25, 26 and 27 radiate RF signals forming radiation elements, and coupled with a tristate micro-strip line 21. Coupling loss with a mobile subscriber is determined by the dimensions of slots 25, 26 and 27. Remaining RF signals after radiated from slots 25, 26 and 27 are connected to the terminal 12 and coupled to the next stage leaky antenna.

FIG. 9 shows another example of this invention, and 21 is a transmission line by a tristate micro-strip line, 25, 26 and 27 are slot antenna formed on the outer conductor of tristate micro-strip line, 11 is an input terminal, 53 is an outer conductor of tristate micro-strip line, and 54 is a printed wire board. Slots 25, 26 and 27 radiate RF signals forming radiation elements, and coupled with a tristate micro-strip line 21. Slots 25, 26 and 27 are increased their dimensions according to the distance from the terminal 11 to make equally radite the RF signals compensating the loss in micro-strip line 22 and 23.

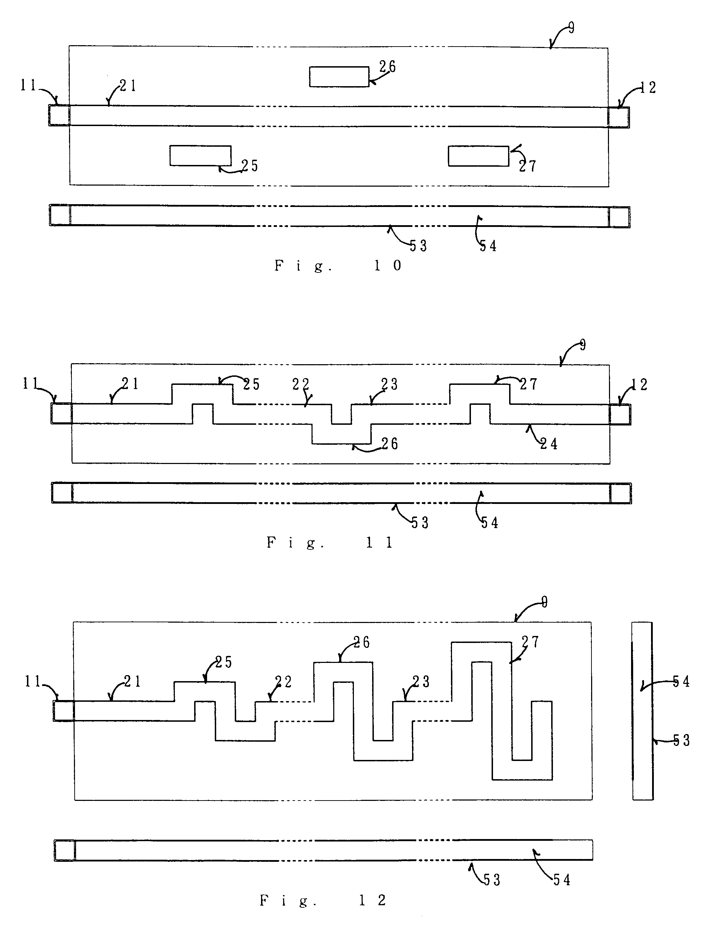

FIG. 10 shows another example of this invention, and 21 is a transmission line by a micro-strip line, 25, 26 and 27 are radiation elements formed near by the micro-strip line 21, 11 is an input terminal, 12 is an output terminal, 53 is a ground plane, and 54 is a printed wire board. Radiation capability from the radiation elements 25, 26 and 27 is adjusted by the space with the micro-strip line 21. Remaining RF signals after radiated from radiation elements 25, 26 and 27 are connected to the terminal 12 and coupled to the next stage leaky antenna.

FIG. 11 shows another example of this invention, and 21, 22 and 23 are transmission lines by a micro-strip line, 25, 26 and 27 are radiation elements by forming the zigzag micro-strip lines, 11 is an input terminal, 12 is an output terminal, 53 is a ground plane, and 54 is a printed wire board. Radiation capability from the radiation elements 25, 26 and 27 is adjusted by the degree of the zigzag line. Remaining RF signals after radiated from radiation elements 25, 26 and 27 are connected to the terminal 12 and coupled to the next stage leaky antenna.

FIG. 12 shows another example of this invention, and 21, 22 and 23 are transmission lines by a tristate micro-strip line, 25, 26 and 27 are radiation elements by forming zigzag micro-strip lines, 11 is an input terminal, 53 is a ground plane, and 54 is a printed wire board. Radiation capability from the radiation elements 25, 26 and 27 are adjusted by the degree of the zigzag line. Degree of the zigzag line is increased according to the distance from the terminal 11 to make equally radite the RF signals compensating the loss in micro-strip line 22 and 23.

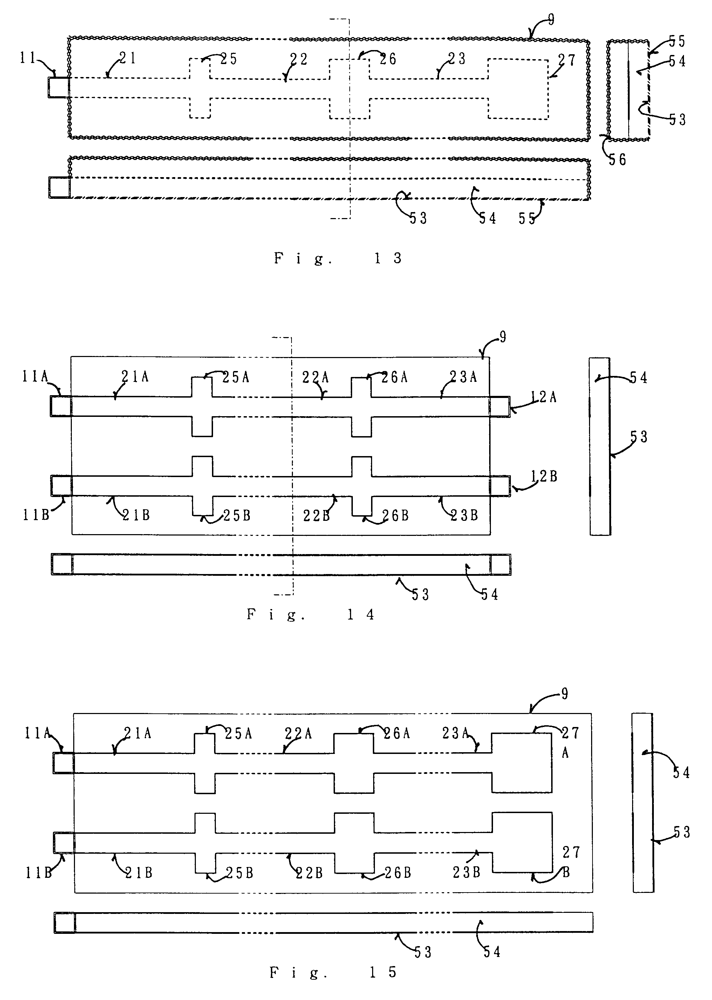

FIG. 13 shows another example of this invention, and an adhesive agent 55 is attached on the back side and an insulation film 56 is attached on the front side of leaky antenna 9 shown in Fig.7. This leaky antenna can be easily fixed on a ceiling with the adhensive agent 55, and if the color of film 56 is the same and/or complementary color, it has advantages to match with the interior design.

FIG. 14 shows another example of this invention, and 21A, 21B, 22A, 22B, 23A and 23B are micro-strip lines, 25A, 25B, 26A and 26B are micro-strip antenna, 11A and 11B are input terminals, 12A and 12B are output terminals, 53 is a ground plane, and 54 is a Printed Wire Board. Micro-strip antenna 25A, 26A and 25B, 26B are configured two lines of leaky antenna, and coupling losses between two lines can be maintained more than two times of coupling loss with a mobile subscriber. The radiation patern of this antenna can be optimized by adjusting the interval of micro-strip antenna 25A, 26A and/or 25B, 26B, and also the length of micro-strip line 22A and/or 22B, And coupling losses between two lines can be adjusted by the distance between 25A and 25B and/or 26A and 26B, And since the stations, which want to talk, must monitor the channel whether it is occupied by other stations or not, and since it is very difficult by far-near problem if they have adopted FDMA/TDD TDMA/TDD or CDMA system which are operated in the same frequency for both transmitter and receiver, this leaky antenna gives big advantages to make possible to listen-before-talk whether this channel is occupied or not.

FIG. 15 shows another example of this invention, and 21A, 21B, 22A 22B, 23A and 23B are micro-strip lines, 25A, 25B, 26A, 26B, 27A and 27B are micro-strip antenna, 11A and 11B are input terminals, 53 is a ground plane, and 54 is a Printed Wire Board. Micro-strip antenna 25A, 26A, 27A and 25B, 26B, 27B are configured two lines of leaky antenna, and coupling losses between two lines can be maintained more than two times of coupling loss with a mobile subscriber. Radiation capability from the radiation elements 25A, 25B, 26A, 26B, 27A and 27B are adjusted by the dimensions of the micro-strip antenna. Dimensions of the micro-strip antenna are increased according to the distance from the terminal 11A or 11B to make equally radite the RF signals compensating the loss in micro-strip line 22A, 22B, 23A and/or 23B.

FIG. 16 shows another example of this invention, and 21A, 21B, 22A, 22B, 23A and 23B are micro-strip lines, 25A, 25B, 26A and 26B are micro-strip antenna, 11A and 11B are input terminals, 12A and 12B are output terminals, 53A and 53B are ground planes, and 54A and 54B are Printed Wire Boards. Since the ground planes 53A and 53B are formed a conduit, much more isolations between two lines of leaky antenna can be obtained.

FIGs. 17 (A) and (B) show another examples of this invention, and 41A and 41B are leaky coaxial cable, 42A, 42B, 43A and 43B are radiation slots, 11A and 11B are input terminals, 12A and 12B are output terminals, 53A and 53B are outer conductors of the leaky coaxial cable 41A and 41B, and 21A and 21B are inner conductors of the leaky coaxial cable 41A and 41B. Since the leaky coaxial cables 41A and 41B has outer conductors 53A and 53B, it is effective as ground planes to prevent standing waves. Fig. 17(A) has parallel slots 42A and 42B, and outer conductors are formed the charactor 8. Fig. 17(B) has interdigit slots 42A and 42B, and outer conductors are formed a grass flam. Coupling losses with a mobile subscriber is determined with the intervals and/or dimensions of slots 42A, 43A and/or 42B, 43B. Isolation between two leaky coaxial cables is determined with distance between two cables 41A and 41B, and the intervals and/or dimensions of slots 42A, 43A and/or 42B, 43B, and much more isolations can be obtained if these slots are formed interdigit.

## Claims

1. For use in a mobile wireless communication system, a leaky antenna for enhancing one or more carriers into all around the serving area, and to ensure a good quality of the communications between a base station and a subscriber, the said leaky antenna comprising:
(a) an input terminal to couple RF signals;
(b) a ground plane consisting of a metal conductor;
(c) a RF transmission line (with a strip line or flat or open coaxial cable) connected to the said input terminal and located adjoining to the ground plane;
(d) a plurality of radiating elements coupled directly and/or adjoining to the RF transmission line; and
(e) these radiating elements are formed in a chain (like line or belt, or radiation from the central).

2. For use in a mobile wireless communication system, a leaky antenna for enhancing one or more carriers into all around the serving area, and/or to ensure a good quality of the communications between a base station and a subscriber, the said leaky antenna comprising:
(a) an input terminal to couple RF signals;
(b) an output terminal to couple a part of RF signals supplied to the input terminal;
(c) a ground plane consisting of a metal conductor;
(d) a RF transmission line (with a strip line or flat or open coaxial cable) connected to the said input terminal and between input and output terminals, and located adjoining to the ground plane;
(e) a plurality of radiating elements coupled directly and/or adjoining to the RF transmission line; and
(f) these radiating elements are formed like line or belt or radiated from the central.

3. For use in a mobile wireless communication system, a leaky antenna for enhancing one or more carriers into all around the serving area, and to ensure a good quality of the communications between a base station and a subscriber, the said leaky antenna comprising:
(a) separated input terminals to couple down-link and up-link RF signals;
(b) a ground plane consisting of a metal conductor;
(c) RF transmission lines (with a strip line or flat or open coaxial cable) connected to the said input terminals and located adjoining to the ground plane;
(d) a plurality of radiating elements coupled (directly and/or adjoining) to the RF transmission lines; and
(e) these radiating elements are formed in a chain (like line or belt, or radiation from the central).

4. For use in a mobile wireless communication system, a leaky antenna for enhancing one or more carriers into all around the serving area, and/or to ensure a good quality of the communications between a base station and a subscriber, the said leaky antenna comprising:
(a) separated input terminals to couple down-link and up-link RF signals;
(b) separated output terminals to couple a part of down-link and up-link RF signals supplied to the input terminals;
(c) a ground plane consisting of a metal conductor;
(d) RF transmission lines (with a strip line or flat or open coaxial cable) connected to the said input terminals and between input and output terminals, and located adjoining to the ground plane;
(e) a plurality of radiating elements coupled (directly and/or adjoining) to the RF transmission lines; and
(f) these radiating elements are formed in a chain (like line or belt or radiated from the central).

5. A leaky antenna as defined in any of Claims 1, 2, 3 and 4 wherein said insulating film are installed instead of the printed wire board and comprising:
(a) in between a ground plane and radiating elements;
(b) in between a ground plane and RF transmission line;
(c) covering outside of ground plane, RF transmission line, and radiating elements; and
(d) these said all above are complexed into one body.

6. A leaky antenna as defined in Claims 1, 2, 3 and 4, wherein said ground plane, radiating elements, and a RF transmission line are formed in a belt like strip and in which one dimension at least is thin.

7. A leaky antenna as defined in Claims 1, 2, 3 and 4, wherein said coupling between a radiating element and RF transmission line is made by the loose coupling means such as by conducted, electro motive forces, magnetic motive forces, and/or electromagnetic motive forces.

8. A leaky antenna as defined in Claims 1, 2, 3 and 4, wherein said ground plane is formed with a discontinuity to radiate RF signals such as zigzagged, meshed, waved, conduit like, pipe like, letter like, grass flam like, and/or slot like.

9. A leaky antenna as defined in Claims 1, 2, 3 and 4, wherein said RF transmission line is formed with a discontinuity to radiate RF signals such as square plated, meshed, waved, poled, pipe like, zigzagged, circle plated and/or slotted.

10. A leaky antenna as defined in Claims 1, 2, 3 and 4, wherein said radiating elements are formed with larger radiating capability according to the distance from the input terminal.
